# EUROPEAN PATENT APPLICATION

(11) **EP 3 306 549 A1**
(43) Date of publication of application: **11.04.2018**
(21) Application number: 16807747.7
(22) Date of filing: 07.06.2016
(51) Int. Cl.: G06Q 20/38, G06Q 20/30, G06Q 20/32, G06Q 20/40

(54) **USER NON-REPUDIATION PAYMENT SYSTEM AND METHOD USING USER TERMINAL**

(30) Priority: 08.06.2015 KR 20150080630
(71) Applicant: Ebay Korea Co. Ltd., Seoul 06236 (KR)
(72) Inventor: KIM, Phil Jae, Seoul 06236 (KR)
(74) Representative: Collins, John David
(86) International application number: PCT/KR2016/005966
(87) International publication number: WO 2016/200107

(57) **Abstract**

Provided are a payment system for user non-repudiation using a user terminal and a method thereof. When requesting a payment to a user in an online/offline market, an easy and safe payment can be achieved since high security is secured by adding a non-repudiation function besides a user identification function using a one time password (OTP) and a public key infrastructure (PKI).

## Description

### BACKGROUND

### 1. Field of the Invention

The present invention relates to a payment system for user non-repudiation using a user terminal and a method thereof, and more particularly, to a payment system for user non-repudiation using a user terminal and a method thereof which can secure high security and pay a price more easily and safely by adding a non-repudiation function besides a user identification function using a one time password (OTP) and a public key infrastructure (PKI) when requesting a payment to a user in an online/offline market.

### 2. Discussion of Related Art

Recently, various methods for an easy payment are being proposed in a payment/billing online/offline market. Among them, when presenting user verification information such as a membership barcode in an application in which a user is authenticated to the user's own user terminal, a function performing the payment (including a reward use) using a point-of-sale (POS) device which is distributed to the public such as a barcode scanner is widely being used.

However, it is not suitable for large financial transactions since there is no non-repudiation function in a conventional method. In the conventional method, there is a user identification function needed for the payment but there is not the non-repudiation function. That is, there is a problem in which another person uses by copying and hacking a barcode.

Meanwhile, the barcode is a kind of member identification (ID), and the payment is achieved by presenting the barcode through the user terminal and confirming the barcode in an enterprise. The barcode is based on a credit in which only a member knows the barcode. However, since the barcode can be exposed to the outside in the process of transactions, there is a probability in which another person besides the user uses by hacking barcode information.

A general public key infrastructure (PKI) algorithm is an algorithm capable of preventing the user from denying that the user has performed a specific transaction. An accredited certificate uses the algorithm.

However, in order to maintain security of the algorithm, since lengths of the public key and a secret key should be over a specific length, there is a limitation when the user memorizes the keys or displaying the keys as the barcode. Accordingly, in an accredited certificate system, the key is stored in a separate storage device in an encrypted data format and is used.

### [Prior Art Document]

### [Patent document]

(Patent document 0001) Korean Patent Publication No. 10-2003-0045231

### SUMMARY OF THE INVENTION

The present invention is directed to a payment system for user non-repudiation using a user terminal and a method thereof which can secure high security and pay a price more easily and safely by adding a non-repudiation function besides a user identification function using a one time password (OTP) and a public key infrastructure (PKI) when requesting a payment to a user in an online/offline market.

According to one aspect of the present invention, there is provided a payment system for user non-repudiation using a user terminal, including: a user terminal configured to generate a pair of new public key and secret key and a one time password (OTP) table for a user using a payment related application, store the generated secret key and the OTP table by encrypting using a user specific password when a non-repudiation payment registration is requested by a user, transmit to and register in a payment/authentication server which will be described below by encrypting the OTP table encrypted using the generated public key or secret key using a public key or a secret key of the payment/authentication server; a payment information reader configured to receive read information output from the user terminal, and transmit the read information together with payment request price information to the payment/authentication server; and the payment/authentication server configured to register and manage by receiving data obtained by encrypting the OTP table encrypted using the secret key from the user terminal, and process the read information and the payment request information received from the user terminal, wherein, when requesting a payment to a corresponding user in an online/offline market, an encrypted OTP table and an encrypted secret key stored in the user terminal are decrypted using the user specific password in the payment related application installed in the user terminal, and read information is generated and output using a portion of the decrypted OTP table and a corresponding user identification information, and the payment/authentication server decrypts a portion of the OTP table in the read information transmitted from the payment information reader and a remaining portion excluding the portion of the OTP table in the OTP table encrypted using the secret key from the user terminal using the public key of a corresponding user, and after this, performs a payment approval when the OTP table decrypted using the public key and the OTP table registered in the payment/authentication server are matched.

Here, when the payment approval is completed through the payment/authentication server, it may be desirable to transmit payment approval completion details to the payment information reader and the user terminal.

Preferably, the secret key and OTP table generated through the payment related application installed in the user terminal may be stored in a predetermined memory region of the user terminal or a separate memory device by being encrypted using a user specific password specified by a corresponding user.

Preferably, when registering the public key generated through the payment related application installed in the user terminal in the payment/authentication server, a user identification process may be performed using the specific identification information of the user terminal, and after this, the generated one public key may be registered in the payment/authentication server by being mapped to the corresponding user.

Preferably, the payment/authentication server may store the generated OTP table in a storage means of the payment/authentication server or a separate storage server by constructing a database for each user.

Preferably, the secret key and the OTP table may be stored in a predetermined memory region of the user terminal or a separate memory device by being again encrypted using the user specific password through the payment related application installed in the user terminal.

Preferably, the read information output from the user terminal may include barcode display or beacon signal information.

According to another aspect of the present invention, there is provided a payment method for user non-repudiation when paying a user purchase price in an online/offline market using a system including a user terminal, a payment information reader, and a payment/authentication server, the method including: (a) when requesting a non-repudiation payment registration, generating a pair of new public key and secret key and an OTP table for a user using a payment related application installed in the user terminal, after this, storing by encrypting the generated secret key and the OTP table using a user specific password, and registering in the payment/authentication server by encrypting the OTP table encrypted using the generated public key and secret key using a public key or a secret key of the payment/authentication server; (b) when requesting a payment to a corresponding user in the online/offline market, decrypting the encrypted OTP table and secret key stored in the operation (a) using the payment related application installed in the user terminal using the user specific password; (c) generating and outputting read information using corresponding user identification information together with a portion of the OTP table decrypted in the operation (b) using the payment related application installed in the user terminal, and transmitting to the payment/authentication server by encrypting a remaining portion excluding the portion of the OTP table in the OTP table using the secret key and encrypting the remaining portion using the public key of the payment/authentication server; (d) receiving the read information output in the operation (c) through the payment information reader, and transmitting the read information together with payment request price information to the payment/authentication server; and (e) decrypting the remaining portion of the OTP table transmitted in the operation (c) through the payment/authentication server using the public key of the corresponding user, after this, combining the remaining portion of the OTP table decrypted using the public key and a portion of the OTP table in the read information transmitted in the operation (d), decrypting the OTP table stored in the payment/authentication server by encrypting using the secret key, and performing a payment approval when the decrypted OTP table and the OTP table registered in the payment/authentication server are matched.

Here, after the operation (e), the method may further include transmitting payment approval completion details to the payment information reader and the user terminal when the payment approval is completed through the payment/authentication server.

Preferably, in the operation (a), the generated secret key and OTP table may be stored in a predetermined memory region of the user terminal or a separate memory device by being encrypted using the user specific password specified by the corresponding user.

Preferably, in the operation (a), when registering the generated public key in the payment/authentication server, a user identification process using specific identification information of the user terminal may be performed, and after this, the generated one public key may be registered in the payment/authentication server by being mapped to the corresponding user.

Preferably, in the operation (a), when storing the OTP table encrypted using the generated public key and secret key using a public key and a secret key of the payment/authentication server, the encrypted OTP table may be stored in a storage means of the payment/authentication server or a separate storage server by constructing a database for each user.

Preferably, in each of the operations, when encrypting using the public key and the secret key, an asymmetric encryption algorithm may be used.

Preferably, in each of the operations, when encrypting using the user specific password, a symmetric encryption algorithm may be used.

Preferably, in the operation (e), the read information may include barcode display or beacon signal information.

According to still another aspect of the present invention, there is provided a computer readable recording medium of recording a program for executing the payment method for user non-repudiation using the user terminal by a computer.

The payment method for user non-repudiation using the user terminal according to exemplary embodiments of the present invention may also be embodied as computer readable codes on a computer readable recording medium. The computer readable recording medium is any data storage device that can store programs or data which can be thereafter read by a computer system.

Examples of the computer readable recording medium include read-only memory (ROM), random-access memory (RAM), CD-ROMs, magnetic tapes, hard disks, floppy disks, portable storage devices, a flash memory, optical data storage devices, and so on.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is an entire block diagram illustrating a payment system for user non-repudiation using a user terminal according to an exemplary embodiment of the present invention;
FIG. 2 is a detailed flowchart for describing a non-repudiation payment registration operation in a payment method for user non-repudiation using a user terminal according to an exemplary embodiment of the present invention; and
FIG. 3 is a detailed flowchart for describing a payment operation for a user purchase price in a payment method for user non-repudiation using a user terminal according to an exemplary embodiment of the present invention.

### DETAILED DESCRIPTION OF EXEMPLARY EMBODIMENTS

However, the present invention is not limited to exemplary embodiments which will be described hereinafter, and can be implemented by various different types. Exemplary embodiments of the present invention are described below in sufficient detail to enable those of ordinary skill in the art to embody and practice the present invention. The present invention is defined by claims. Throughout this specification, like numerals represent like components. The terminology "and/or" includes any and all combinations of one or more of the associated listed items.

It will be understood that, although the terms "first," "second," etc. may be used herein to describe various elements, these elements should not be limited by these terms. These terms are only used to distinguish one element from another. For example, a first element, a first component, or a first section could be termed a second element, a second component, or a second section, and a second element, a second component, or a second section could be termed a first element, a first component, or a first section without departing from the scope of the inventive concept.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When a detailed description with respect to a well-known function or configuration is determined to obscure the gist of the present invention in the following description of the exemplary embodiments of the present invention, a detailed description thereof will be omitted. The terms used hereinafter are defined by considering a function in exemplary embodiments of the invention, and their meaning may be changed according to intentions of a user or an operator or customs, etc. Accordingly, the terminology will be defined based on the contents throughout this specification.

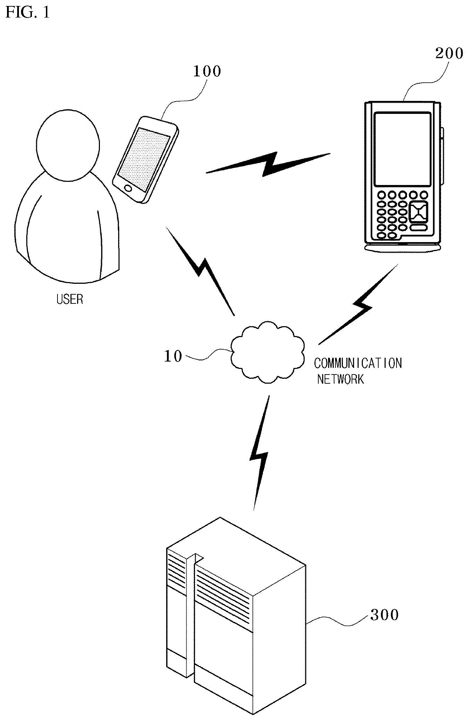

FIG. 1 is an entire block diagram illustrating a payment system for user non-repudiation using a user terminal according to an exemplary embodiment of the present invention.

Referring to FIG. 1, a payment system for user non-repudiation using a user terminal according to an exemplary embodiment of the present invention may largely include a user terminal 100, a payment information reader 200, and a payment/authentication server 300, etc.

Here, the user terminal 100 may be connected to the payment/authentication server 300 through a communication network 10, and for example, may be connected to the payment information reader 200 through barcode scanning technology or a near field communication (NFC) such as beacon, radio-frequency identification (RFID), wireless-fidelity (Wi-Fi), etc.

The user terminal 100 may be implemented as a general smart phone, and the smart phone may be a phone based on an open type operating system capable of downloading various applications desired by a purchaser unlike a normal mobile phone (so-called a feature phone), and freely using and deleting the applications, and may be understood as every mobile phone having not only functions of voice/video call, Internet data communication, etc. which are generally used but also a mobile office function, or a communication device including every Internet phone or tablet personal computer (PC) not having a voice call function but capable of performing Internet access.

Further, the smart phone may be implemented as a smart phone in which various open type operating systems are installed, and for example, the open type operating systems may include Symbian of Nokia Ltd., a blackberry operating system of Research In Motion (RIM), Ltd., an iphone operating system (IOS) of Apple Inc., a windows mobile of Microsoft Co., Android of Google Inc., Bada of Samsung Electronics Co.

Since the smart phone uses the open type operating system, the purchaser may arbitrarily install and manage various application programs unlike the mobile phone having a close type operating system.

That is, the smart phone may basically include a control unit, a memory unit, a screen output unit, a key input unit, a sound output unit, a sound input unit, a camera unit, a wireless network communication module, a near field communication (NFC) module, and a battery for power supply, etc.

The control unit may be a general name of a configuration having a function controlling an operation of the smart phone, include at least one processor and an execution memory, and be connected to each function unit included in the smart phone through a bus.

The control unit may calculate by loading at least one program code included in the smart phone to the execution memory through the processor, and control an operation of the smart phone by transmitting the calculated result to at least one function element through the bus.

The memory unit may be a general name of a non-volatile memory included in the smart phone, and store and maintain at least one program code executed through the control unit and at least one data set used by the program code. The memory unit may basically store a system program code and a system data set corresponding to the operating system of the smart phone, a communication program code and a communication data set processing wireless communication connection of the smart phone, and at least one application program code and an application data set, and a program code and a data set for implementing the present invention may be also stored in the memory unit.

The screen output unit may include a screen output device (for example, a liquid crystal display (LCD) device) and an output module driving the screen output device, be connected to the control unit through the bus, and output an operation result corresponding to the screen output among various kinds of operation results of the control unit to the screen output device.

The key input unit may include a key input device (or a touch screen device linked to the screen output unit) including at least one key button and an input module driving the key input device, be connected to the control unit through the bus, and input a command instructing various kinds of operations of the control unit or input data needed for the operation of the control unit.

The sound output unit may include a speaker outputting a sound signal and a sound module driving the speaker, be connected to the control unit through the bus, and output the operation result corresponding to a sound output among various kind of operation results of the control unit through the speaker. The sound module may decode and convert sound data to be output through the speaker into a sound signal.

The sound input unit may include a microphone receiving the sound signal and a sound module driving the microphone, and transmit the sound data input through the microphone to the control unit. The sound module may encode by encoding the sound signal input through the microphone.

The camera unit may include an optical unit, a charge coupled device (CCD), and a camera module driving the CCD, and obtain bitmap data input to the CCD through the optical unit. The bitmap data may include both still image data and video data.

The wireless network communication module may be a general name of a communication configuration of connecting wireless communication, include at least one among an antenna, a radio frequency (RF) module, a baseband module, a signal processing module which are capable of transmitting and receiving a wireless frequency signal of a specific frequency band, be connected to the control unit through the bus, transmit the operation result corresponding to the wireless communication among various kinds of operation results of the control unit through the wireless communication or transmit data to the control unit by receiving the data through the wireless communication, and also maintain access of the wireless communication, registration, communication, and handoff procedures.

Further, the wireless network communication module may include a mobile communication configuration performing at least one among access to a mobile communication network, position registration, call processing, call connection, data communication, handoff procedures according to a code division multiple access (CDMA)/a wideband code division multiple access (WCDMA) rule. Meanwhile, the wireless network communication module may further include a mobile Internet communication configuration performing at least one among access to a mobile Internet, position registration, data communication, handoff procedures based on an Institute of Electrical and Electronics Engineers (IEEE) 802.16 standard according to intentions of one of ordinary skill in the art, and the present invention is not limited to the wireless communication configuration provided by the wireless communication module.

The NFC module may be configured to connect a communication session using a wireless frequency signal as a communication medium within a predetermined distance, and preferably, include at least one among radio frequency identification (RFID) communication, Bluetooth communication, Wi-Fi communication, and airborne radio communication of an ISO 180000 series standard. Further, the NFC module may be integrated with the wireless network communication module.

The smart phone configured as the above may mean a terminal capable of performing wireless communication, and every terminal capable of transmitting and receiving data through a network including the Internet besides the smart phone may be available. That is, the smart phone may include one or more among a notebook PC and a tablet PC having a short message service function and a network connection function, and a mobile terminal which is portable and movable.

The user terminal 100 may be implemented as a general smart phone, but is not limited thereto, for example, be implemented as a computer such as a desktop PC, a notebook PC, etc., and be all kinds of wired and wireless communication devices capable of using various payment services by connecting to the payment information reader 200 and the payment/authentication server 300 through the NFC or the network 10.

In particular, for example, when the user terminal 100 applied to the exemplary embodiment of the present invention is implemented as the smart phone, the user terminal 100 may download a payment related application (for example, a easy payment application) program through an application (App) store and perform a payment related application service.

When a non-repudiation payment registration is requested by a user using the payment related application service installed in the user terminal 100, a function generating a pair of new public key and secret key and a one time password (OTP) table for the user may be performed.

Further, the secret key and the OTP table generated through the payment related application service installed in the user terminal 100 may be safely stored in a predetermined memory region of the user terminal 100 or a separate memory device by encrypting the generated secret key and OTP table using a user specific password only the user knows.

Moreover, since a function registering the public key generated through the payment related application service installed in the user terminal 100 in the payment/authentication server 300 is performed, when registering the generated public key in the payment/authentication server 300, it may be desirable to register in the payment/authentication server 300 by mapping the generated one public key and a corresponding user after performing a user identification process using the specific identification information (for example, USIM information, etc.) of the user terminal 100.

Further, the secret key and the OTP table may be safely stored in the predetermined memory region of the user terminal 100 or be stored in the separate memory device by again encrypting the secret key and the OTP table using the user specific password through the payment related application service installed in the user terminal 100.

At this time, when encrypting using the user specific password, it may be desirable to use a symmetric key encryption algorithm.

Also, when requesting the payment to a corresponding user in an online/offline market, the OTP table stored in the user terminal 100 may be decrypted using the user specific password only the user knows through the payment related application service installed in the user terminal 100.

Further, read information (preferably, barcode display information or a beacon signal, etc.) may be generated and output using a portion of the OTP table decrypted through the payment related application service installed in the user terminal 100 together with corresponding user identification information.

Moreover, a remaining portion of the OTP table decrypted through the payment related application service installed in the user terminal 100 may be directly transmitted to the payment/authentication server 300 by being encrypted using the public key of the payment/authentication server 300.

Also, the payment information reader 200 may be connected to the payment/authentication server 300 through the communication network 10, and for example, be connected to the user terminal 100 through the barcode scanning technology or the NFC such as beacon, RFID, Wi-Fi, etc.

The payment information reader 200 may perform a function receiving the read information output from the user terminal 100 and transmitting the read information together with payment request price information to the payment/authentication server 300, for example, be implemented as a barcode scanner or a beacon signal reception device, etc., and be replaced by any device capable of reading information transmitted by the user terminal 100.

The payment/authentication server 300 may be connected to each of the user terminal 100 and the payment information reader 200 through the communication network 10, perform an operation needed when processing the OTP table by cooperating with the user terminal 100, and perform a function processing a payment approval on a user purchase price requested from the payment information reader 200.

Further, the payment/authentication server 300 may separate the user identification information and the portion of the OTP table from the read information transmitted from the payment information reader 200, combine by decrypting the portion of the OTP table and the remaining portion of the OTP table which is encrypted using the secret key of the user from the user terminal 100 and is directly transmitted using the public key of the corresponding user, and after this, perform the payment approval when the combined entire OTP table and the OTP table stored in the payment/authentication server 300 are matched. In the exemplary embodiment, the read information may be further encrypted using the user secret key for security according to an allowable data length of a read system, for example, according to a maximum allowable data length capable of being implemented in a barcode system and a beacon system.

At this time, when the payment approval is completed through the payment/authentication server 300, it may be desirable to transmit payment approval completion details to the payment information reader 200 and the user terminal 100.

Further, the payment/authentication server 300 may safely store the generated OTP table in a storage means of the payment/authentication server 300 or a separate storage server by constructing a database (DB) for each user,.

Further, when encrypting using the public key of a corresponding user, it may be desirable to use an asymmetric encryption algorithm.

Moreover, the payment/authentication server 300 may be implemented by separating as a server performing the payment and a server performing the authentication, or as a single server performing both the payment and the authentication.

Meanwhile, the communication network 10 may be a communication network which is a high speed backbone network of a large communication network capable of performing a high-capacity, long distance voice and data service, and be a next generation wireless network including Wi-Fi, wireless broadband Internet (Wibro), worldwide interoperability for microwave (Wimax), etc. for providing the Internet or a high speed multimedia service.

When the communication network 10 is a mobile communication network, the communication network 10 may be a synchronous mobile communication network, or an asynchronous mobile communication network. As an exemplary embodiment of the asynchronous mobile communication network, the asynchronous mobile communication network may be a communication network of a WCDMA manner. Although not shown, the mobile communication network may include a radio network controller (RNC). Meanwhile, although an example of the WCDMA network has been described, the communication network 10 may be a next generation communication network such as a third generation (3G) network, a fourth generation (4G) long term evolution (LTE) network, a fifth generation (5G) network, etc. and an Internet protocol (IP) network based on the IP besides them. The communication network 10 may perform a function of mutually transmitting a signal and data among the user terminal 100 and the payment information reader 200, and the payment/authentication server 300.

Hereinafter, a user non-repudiation payment method using the user terminal according to an exemplary embodiment of the present invention will be described in detail.

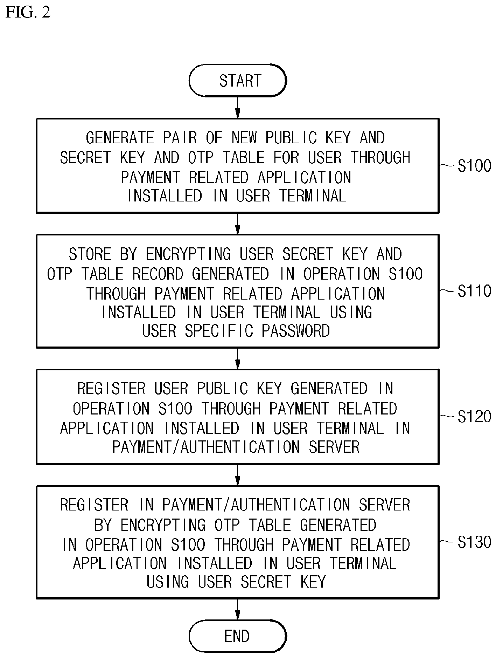

FIG. 2 is a detailed flowchart for describing a non-repudiation payment registration operation in a payment method for user non-repudiation using a user terminal according to an exemplary embodiment of the present invention.

Referring to FIGS. 1 and 2, a non-repudiation payment registration operation in a payment method for user non-repudiation using a user terminal according to an exemplary embodiment of the present invention may firstly generate a pair of new public key and secret key and an OTP table for the user in the payment related application installed in the user terminal 100 when the user requests the non-repudiation payment registration through the payment related application installed in the user terminal 100 (S100).

After this, the payment related application installed in the user terminal 100 may store the secret key and the OTP table generated in the operation S100 by encrypting using the user specific password only the user knows (S110).

At this time, it may be desirable to encrypt the secret key and the OTP table which are generated in the operation S100 in the operation S110, and after this, to store the encrypted secret key and the encrypted OTP table in a predetermined memory region of the user terminal 100 safely or a separate memory device.

After this, the payment related application installed in the user terminal 100 may register the public key generated in the operation S100 in the payment/authentication server 300 (S120), and register in the payment/authentication server 300 by encrypting the OTP table generated in the operation S100 using the secret key of the user (S130). At this time, it may be desirable to register in the payment/authentication server 300 by mapping the generated only one public key and a corresponding user after performing the user identification process using the specific identification information (for example, USIM information, etc.) of the user terminal 100 when registering the generated public key in the payment/authentication server 300. Further, in data communication for the registration, it may be desirable to register while maintaining the security and by performing the communication after encrypting using the public key of the payment/authentication server 300.

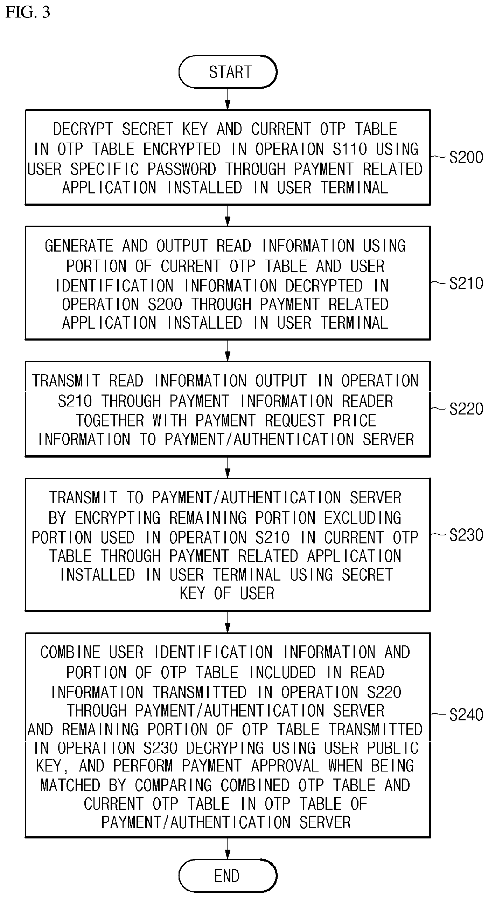

FIG. 3 is a detailed flowchart for describing a payment operation for a user purchase price in a payment method for user non-repudiation using a user terminal according to an exemplary embodiment of the present invention.

Referring to FIGS. 1 and 3, in a payment operation for a user purchase price in a payment method for user non-repudiation using a user terminal according to an exemplary embodiment of the present invention, first, when requesting the payment to the user in the online/offline market, a corresponding user may execute the payment related application installed in the user terminal 100.

Next, the payment related application installed in the user terminal 100 may decrypt a current OTP table in the secret key and the OTP table which are encrypted in the operation S110 using the user specific password (S200). Here, since the OTP table use different keys according to a time, the current OTP table may correspond to the OTP table of a current time among entire time list data.

After this, the read information (preferably, barcode display information or a beacon signal, etc.) may be generated and output using a portion of the current OTP table and a corresponding user identification information (for example, a personal ID, etc.) decrypted in the operation S200 through the payment related application installed in the user terminal 100 (S210). For example, the read information may be implemented in various types such as a barcode or a quick response (QR) code capable of being used in the market, and the entire OTP table of the user may not be exposed in the market by generating the read information using the portion of the current OTP table.

Next, the read information output in the operation S210 through the payment information reader 200 may be received and the received read information together with the payment request price information may be transmitted to the payment/authentication server 300 (S220).

The remaining portion excluding the portion of the OTP table used in the operation S210 in the current OTP table may be transmitted to the payment/authentication server 300 by being encrypted using the secret key of the user through the payment related application installed in the user terminal 100 (S230).

In an exemplary embodiment, the operations S220 and S230 may be simultaneously performed.

Lastly, after forming the entire OTP table by combining the user identification information and the portion of the OTP table included in the read information transmitted in the operation S220 through the payment/authentication server 300 and the remaining portion of the OTP table transmitted in the operation S230 by being decrypted using the user public key, the payment approval may be performed when being matched by comparing the entire OTP table and the current OTP table in the OTP table of the payment/authentication server 300 (S240).

Further, after the operation S240, when the payment approval is completed through the payment/authentication server 300, it may be desirable to further include an operation transmitting the payment approval completion details to the payment information reader 200 and/or the user terminal 100.

Meanwhile, the payment method for user non-repudiation using the user terminal according to an exemplary embodiment of the present invention can also be embodied as computer readable codes on a computer readable recording medium. The computer readable recording medium is any data storage device that can store programs or data which can be thereafter read by a computer system.

Examples of the computer readable recording medium include read-only memory (ROM), random-access memory (RAM), CD-ROMs, magnetic tapes, hard disks, floppy disks, portable storage devices, a flash memory, optical data storage devices, and so on.

Further, the computer readable recording medium can also be distributed over network-coupled computer systems so that the computer readable code is stored and executed in a distributive manner.

According to the payment system for user non-repudiation using the user terminal and the method thereof, when requesting the payment to the user in the online/offline market, the easy and safe payment can be achieved since the high security is secured by adding the non-repudiation function besides the user identification function using the OTP and the PKI.

Although the payment method for user non-repudiation using the user terminal and the method thereof have been described according to exemplary embodiments of the present invention, the present invention is not limited thereto, and various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A payment system for user non-repudiation using a user terminal, comprising:
the user terminal;
a payment information reader configured to receive read information output from the user terminal, and transmit the read information together with payment request price information to a payment/authentication server; and
the payment/authentication server configured to register and manage by receiving data obtained by encrypting a one time password (OTP) table encrypted using a secret key from the user terminal, and process the read information and the payment request information received from the user terminal,
wherein, when requesting a payment to a corresponding user in an online/offline market, an encrypted OTP table and an encrypted secret key stored in the user terminal are decrypted using a user specific password in a payment related application installed in the user terminal, and read information is generated and output using a portion of the decrypted OTP table and a corresponding user identification information, and
the payment/authentication server decrypts a portion of the OTP table in the read information transmitted from the payment information reader and a remaining portion of the OTP table transmitted from the user terminal using a public key of the corresponding user, combines the portion of the OTP table and the remaining portion of the OTP table decrypted using the public key, decrypts the OTP table registered in the payment/authentication server by encrypting using the secret key, and performs a payment approval when the decrypted OTP table and the combined OTP table are matched.

2. The payment system for user non-repudiation using the user terminal of claim 1, wherein the user terminal generates a pair of new public key and secret key and the OTP table for the user when the non-repudiation payment registration is requested by the user using the payment related application, stores the generated secret key and OTP table by encrypting using a user specific password, and transmits to and register in the payment/authentication server by encrypting the OTP table encrypted using the generated public key and secret key using a public key or a secret key of the payment/authentication server.

3. The payment system for user non-repudiation using the user terminal of claim 1, wherein the user terminal encrypts the secret key and OTP table generated through the payment related application installed in the user terminal using a user specific password specified by the corresponding user, and stores the encrypted secret key and OTP table in a predetermined memory region of the user terminal or a separate memory device.

4. The payment system for user non-repudiation using the user terminal of claim 1, wherein the user terminal performs a user identification process using specific identification information of the user terminal when registering the public key generated through the payment related application installed in the user terminal in the payment/authentication server, and after this, registers in the payment/authentication server by mapping the generated one public key and the corresponding user.

5. The payment system for user non-repudiation using the user terminal of claim 1, wherein the user terminal again encrypts the secret key and the OTP table using the user specific password through the payment related application installed in the user terminal, and stores the encrypted secret key and OTP table in a predetermined memory region of the user terminal or a separate memory device.

6. The payment system for user non-repudiation using the user terminal of claim 1, wherein the payment/authentication server stores the generated OTP table in a storage means of the payment/authentication server or a separate storage server by constructing a database for each user.

7. The payment system for user non-repudiation using the user terminal of claim 1, wherein, when a payment approval is completed through the payment/authentication server, the payment/authentication server transmits payment approval completion details to the payment information reader and the user terminal.

8. The payment system for user non-repudiation using the user terminal of claim 1, wherein the read information output from the user terminal includes barcode display or beacon signal information.

9. A payment method for user non-repudiation when paying a user purchase price in an online/offline market using a system comprising a user terminal, a payment information reader, and a payment/authentication server, the payment method comprising:
(a) when requesting a payment to a user in the online/offline market, decrypting an OTP table and a secret key stored by being encrypted in the user terminal using a payment related application installed in the user terminal using a user specific password;
(b) generating and outputting read information using corresponding user identification information together with a portion of the OTP table decrypted in the operation (a) using the payment related application installed in the user terminal, and transmitting to the payment/authentication server by encrypting a remaining portion of the decrypted OTP table using the secret key and encrypting the remaining portion of the decrypted OTP table using a public key of the payment/authentication server;
(c) receiving the read information output in the operation (b) through the payment information reader and transmitting the read information together with payment request price information to the payment/authentication server; and
(d) combining a remaining portion of the OTP table transmitted in the operation (b) through the payment/authentication server and decrypted using the public key and a portion of the OTP table in the read information transmitted in the operation (c), decrypting the OTP table registered in the payment/authentication server by encrypting using the secret key, and performing a payment approval when the decrypted OTP table and the combined OTP table are matched.

10. The payment method for user non-repudiation of claim 9, before the operation (a), further comprising:
(a') when requesting a non-repudiation payment registration using the payment related application installed in the user terminal, generating a pair of new public key and secret key and the OTP table for the user, storing the generated secret key and OTP table by encrypting using a user specific password, and registering the OTP table encrypted using the generated public key and the secret key in the payment/authentication server by encrypting using a public key or a secret key of the payment/authentication server.

11. The payment method for user non-repudiation of claim 10, wherein, in the operation (a'), the generated secret key and OTP table are encrypted using a user specific password specified by a corresponding user, and the encrypted secret key and OTP table are stored in a predetermined memory region of the user terminal or a separate memory device.

12. The payment method for user non-repudiation of claim 10, wherein, in the operation (a'), when registering the generated public key in the payment/authentication server, a user identification process using a specific identification information of the user terminal is performed, and after this, the generated one public key is registered in the payment/authentication server by being mapped to a corresponding user.

13. The payment method for user non-repudiation of claim 10, wherein, in the operation (a'), when storing the OTP table encrypted using the generated public key and secret key using the public key and secret key of the payment/authentication server, the encrypted OTP table is stored in a storage means of the payment/authentication server or a separate storage server by constructing a database for each user.

14. The payment method for user non-repudiation of claim 10, wherein, in each of the operations, when encrypting using the public key and the secret key, an asymmetric encryption algorithm is used.

15. The payment method for user non-repudiation of claim 10, wherein, in each of the operations, when encrypting using the user specific password, a symmetric encryption algorithm is used.

16. The payment method for user non-repudiation of claim 9, wherein, in the operation (b), the read information includes barcode display or beacon signal information.

17. The payment method for user non-repudiation of claim 9, after the operation (d), further comprising, when a payment approval is completed through the payment/authentication server, transmitting payment approval completion details to the payment information reader and the user terminal.

18. A computer readable recording medium of recording a program which can execute the method of any one among claims 9 to 17 by a computer.
